(19) Europäisches Patentamt
European Patent Office
Office européen des brevets

(11) **EP 1 855 411 A2**

(12) **EUROPEAN PATENT APPLICATION**

(43) Date of publication:
**14.11.2007 Bulletin 2007/46**

(51) Int Cl.:
***H04L 1/18*** (2006.01)

(21) Application number: **07009401.6**

(22) Date of filing: **10.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **10.05.2006 KR 20060042106**

(71) Applicant: **Samsung Electronics Co., Ltd.**
**Yeongtong-gu**
**Suwon-si, Gyeonggi-do (KR)**

(72) Inventors:
• **Kim, Hye-Jeong**
**Suwon-si, Gyeonggi-do (KR)**
• **Lee, Do-Young**
**Suwon-si, Gyeonggi-do (KR)**
• **Lee, Hyun-Gu**
**Suwon-si, Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Retransmission apparatus and method for high-speed data processing**

(57) A method for requesting retransmission of high-speed packet data in a receiving Automatic Retransmission reQuest (ARQ) entity of a mobile communication system that simultaneously performs Hybrid Automatic Retransmission reQuest (HARQ) and ARQ. The method includes, upon receipt of a packet, determining a sequence number of the received packet, and determining if there is at least one missing packet preceding the received packet; if there is at least one missing packet, driving a first timer which is set to a time required when a number of retransmission attempts reaches a predetermined maximum number of HARQ retransmissions, and monitoring receipt of the missing packet; and upon expiration of the timer, sending to a transmitting ARQ entity an Acknowledgement (ACK) including a last sequence number among sequence numbers of normally received consecutive ARQ packets.

FIG.7

EP 1 855 411 A2

**Description**

**BACKGROUND OF THE INVENTION**

1. Field of the Invention

The present invention relates generally to a mobile communication system, and in particular, to an efficient retransmission apparatus and method for processing high-speed data.

2. Description of the Related Art

A Universal Mobile Telecommunication Service (UMTS) system is a 3rd generation asynchronous mobile communication system that is based on Global System for Mobile Communications (GSM) and General Packet Radio Services (GPRS), both of which are European mobile communication systems, and uses Wideband Code Division Multiple Access (CDMA).

In the 3rd Generation Partnership Project (3GPP) UMTS standardization, Long Term Evolution (LTE) is under discussion as a next generation mobile communication system of the UMTS system. LTE is technology for realizing high-speed packet based communication at about 100 Mbps, aiming at commercialization in around 2010. To this end, several schemes are now under discussion. For example, the schemes include a scheme of reducing the number of nodes located in a communication path by simplifying architecture of networks, and another scheme of maximally approximating radio protocols to wireless channels.

The LTE system uses Hybrid Automatic Retransmission reQuest (HARQ) to increase transmission efficiency of high-speed packets, and because the LTE system cannot meet various Quality-of-Service (QoS) requirements only with HARQ, outer Automatic Retransmission reQuest (ARQ) can be performed in an upper layer.

HARQ as used herein refers to a technique of soft-combining previously received data with retransmitted data without discarding the previously received data, thereby increasing a reception success rate. More specifically, an HARQ receiving entity determines the presence/absence of error in a received packet and then sends an Acknowledged (HARQ ACK) signal or a Non-Acknowledged (HARQ NACK) signal to a transmitting entity according to the presence/absence of error. The transmitting entity performs a retransmission of the corresponding HARQ packet or a transmission of a new HARQ packet according to the HARQ ACK/NACK signal. The HARQ technique is characterized by soft-combining a retransmitted packet with a previously received packet, thereby reducing an error occurrence probability.

ARQ refers to a technique of checking sequence numbers of received packets and issuing a retransmission request for a missing packet according to the check result, without performing a soft-combining operation between a previously received packet and its retransmitted packets. It is considered that because ARQ and HARQ both serve to recover errored packets, there is no need to operate both of them together. However, because it is hard to obtain a sufficiently low packet error ratio only with HARQ, both ARQ and HARQ should be simultaneously performed in most packet services. As the HARQ ACK/NACK signal is a 1-bit signal, if an HARQ NACK signal is misinterpreted as an HARQ ACK signal (hereinafter referred to as an 'HARQ NACK/ACK error'), the corresponding packet can be completely lost in an HARQ level. As a result, reliability of the HARQ ACK/NACK signal acts as an important factor in determining a packet error ratio in the HARQ level. In the mobile communication system employing both HARQ and ARQ, an ARQ transmitting entity can perform fast retransmission using HARQ transmission information.

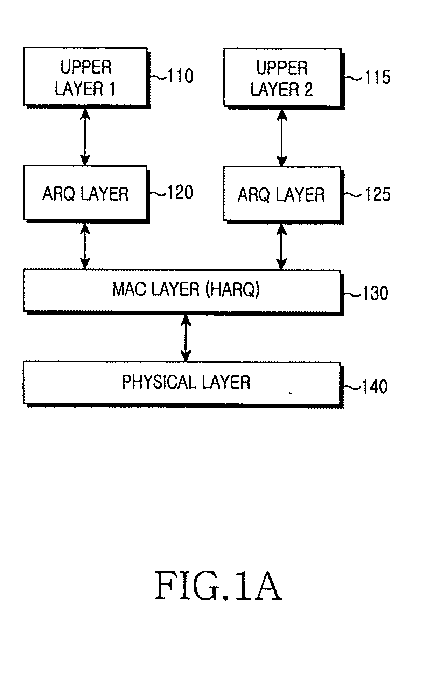

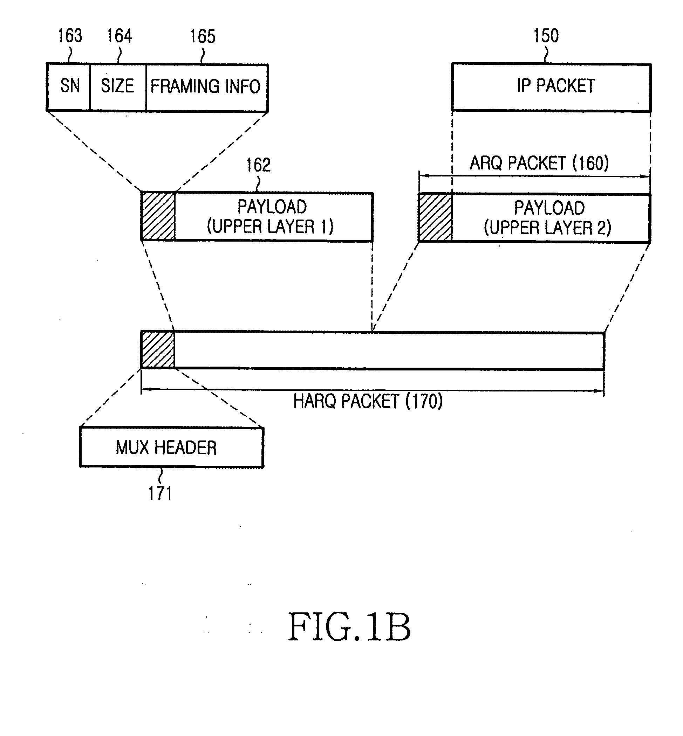

FIGs. 1A and 1B illustrate a structure of a general radio protocol and a packet structure therefor.

Referring to FIG. 1A, a radio protocol is composed of ARQ layers 120 and 125, a Medium Access Control (MAC) layer 130, and a physical layer 140. The ARQ layers 120 and 125 can be configured independently for every service, and they satisfy the required QoS through an ARQ operation.

An upper layer #1 110 and an upper layer #2 115 mean protocol stacks, each of which is configured independently for each individual service. For example, the upper layer can be a protocol stack of AMR(Adaptive Multi-Rate codec/RTP(Real Time Protocol)/UDP(User Datagram Protocol)/IP(Information Provider) or FTP(File Transfer Protocol) /TCP(Transmission Control Protocol)/IP(Information Provider). The MAC layer 130 is connected to a plurality of ARQ layers 120 and 125, and multiplexes a plurality of ARQ packets into one HARQ packet. Further, the MAC layer 130 performs an HARQ operation on the multiplexed HARQ packet. The physical layer 140 performs an operation of transmitting and receiving the HARQ packet over a wireless channel. The ARQ packet is a packet reconfigured by allocating sequence numbers such that an ARQ operation can be performed on the data delivered from the upper layer. The HARQ packet is a unit packet which is actually transmitted and received on a wireless channel through an HARQ operation.

Referring to FIG. 1B, an ARQ packet includes an ARQ packet header 161 composed of a Sequence Number (SN) 163, size information 164 and framing information 165, and a payload 162 to which actual data delivered from the upper layers 110 and 115 are allocated.

For example, if an IP packet 150 has been delivered from the upper layers 110 and 115 to the ARQ layers 120 and 125, the ARQ layers 120 and 125 can transmit the IP packet 150 completely or partially according to wireless channel situation or scheduling situation. Herein, a process of reconfiguring the IP packet 150 delivered from the upper layers 110 and 115 in an appropriate size is called 'framing', and the framing information 165 is the information with which a receiving entity can restore the packet reconfigured in an appropriate size to the original upper layer packet (IP packet). The sequence number 163 is a sequence number sequentially assigned to the ARQ packet 160, and the size information 164 is the information indicating a size of the ARQ packet 160. The ARQ layers 120 and 125 perform an ARQ operation of storing or assembling ARQ packets using the sequence number 163.

An HARQ packet 170 is composed of a multiplexing header 171 and a payload. The multiplexing header 171 includes multiplexing information of the ARQ packet 160. For example, an identifier of a corresponding one of the ARQ layers 120 and 125 can be the multiplexing information. The payload is composed of more than one multiplexed ARQ packets 160. It is obvious to those skilled in the art that the radio protocol structure and the packet structure can be commonly applied to a base station and a terminal.

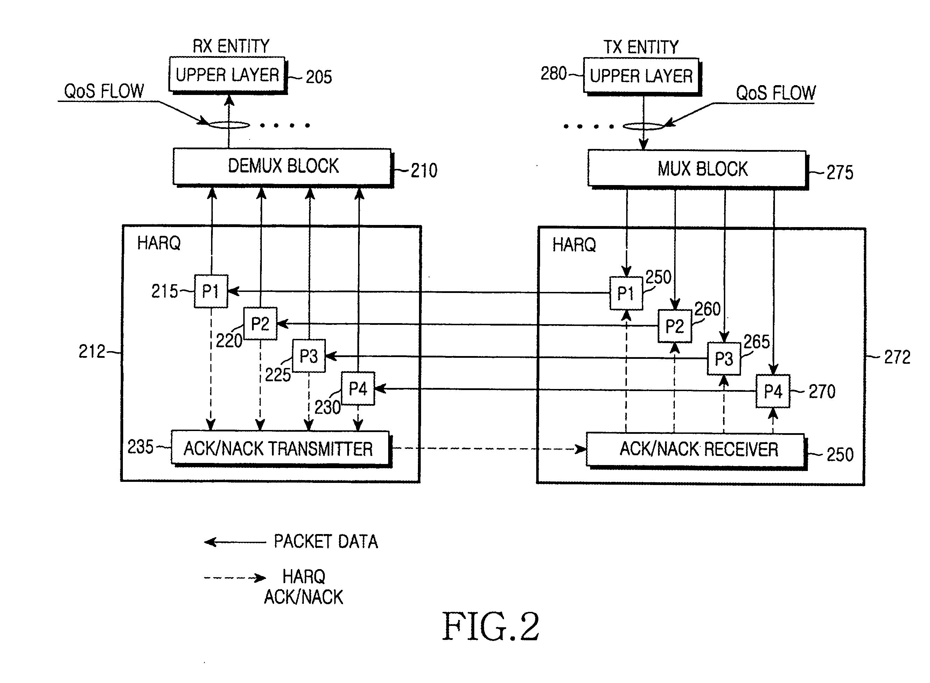

FIG. 2 illustrates a general HARQ operation in HARQ architecture between a transmitting entity and a receiving entity. In an uplink packet service, a terminal serves as the transmitting entity and a base station serves as the receiving entity. On the contrary, in the general downlink packet service, the terminal serves as the receiving entity, and the base station serves as the transmitting entity. In the following description, therefore, the transmitting entity and the receiving entity should not be limited to one of the terminal and the base station.

Referring to FIG. 2, because various types of services can be provided to one terminal, the transmitting entity includes a plurality of upper layers 280 and a multiplexing block 275, and the receiving entity includes a plurality of upper layers 205 and a demultiplexing block 210. The upper layers 205 and 280 can be regarded as, for example, a set of services requiring the same QoS, and for convenience, the flow that has occurred in one upper layer will be referred to herein as a 'QoS flow'.

The multiplexing block 275 serves to insert multiplexing information into the data generated by the several upper layers 280 and to deliver the resulting data to an HARQ block 272. The demultiplexing block 210 performs an operation of delivering multiplexing information of the data provided from an HARQ block 212 to the appropriate upper layers 205.

The HARQ blocks 212 and 272, devices for performing an HARQ operation, are each made up of several HARQ processors. The 'HARQ processor' refers to a unit device in charge of the transmission/reception of an HARQ packet. A transmitting HARQ processor (i.e. HARQ processor in the transmitting entity) takes charge of the transmission and the retransmission of user packets, and a receiving HARQ processor (i.e. HARQ processor in the receiving entity) takes charge of the reception of an HARQ packet and the transmission of an HARQ Acknowledgement (HARQ ACK)/ HARQ Negative Acknowledgement (HARQ NACK) signal.

The HARQ blocks 212 and 272 exist in pairs in the transmitting entity and the receiving entity, and each of the HARQ blocks 212 and 272 includes a plurality of HARQ processors, thereby enabling continual transmission/reception. An operation of the HARQ processor includes transmitting an HARQ packet, receiving HARQ ACK/NACK information in response thereto, and performing retransmission on the HARQ packet according to the HARQ ACK/NACK information. For example, if there is only one HARQ processor, the transmitting entity, after transmitting user data, cannot transmit another packet until it receives HARQ ACK/NACK information for the user data. However, when several HARQ processors are provided, while one processor waits for an HARQ ACK/NACK, other processors can transmit data. This makes continuous transmission/reception possible.

A basic operation of the HARQ processor is as follows.

A transmitting HARQ processor, any one of HARQ P 1 255, HARQ P2 260, HARQ P3 265 and HARQ P4 270, channel-codes and transmits the data received from the multiplexing block 275, and stores the channel-coded data in a buffer (not shown) for later retransmission. The transmitting HARQ processor discards (flushes) the data stored in the buffer upon receipt of ACK information for the data, and performs retransmission on the data upon receipt of NACK information for the data.

A receiving HARQ processor, any one of HARQ P 1 215, HARQ P2 220, HARQ P3 225 and HARQ P4 230, channel-decodes the data received over a physical channel, and determines the presence/absence of an error through a Cyclic Redundancy Check (CRC) operation of determining if there is any error detected in the data. In the presence of error, the receiving HARQ processor stores the data in a buffer (not shown), and sends an HARQ NACK signal. Thereafter, if retransmitted data for the data is received, the receiving HARQ processor soft-combines the retransmitted data with the data previously stored in the buffer, and then determines again the presence/absence of an error in the soft-combined data. If it is determined that there is still an error, the receiving HARQ processor sends an HARQ NACK signal and repeats the above process. However, if it is determined that there is no error, the receiving HARQ processor sends an HARQ ACK signal and delivers user data to the demultiplexing block 210.

The HARQ operation can increase its reliability by retransmitting an errored HARQ packet and performing soft-combining thereon in this manner. However, it is inefficient to achieve a very low Block Error Rate (BLER) only with the HARQ operation.

1. This is caused by the following two reasons.

1.1. If there is an error in an HARQ ACK/NACK signal, the HARQ processor fails to detect the error.

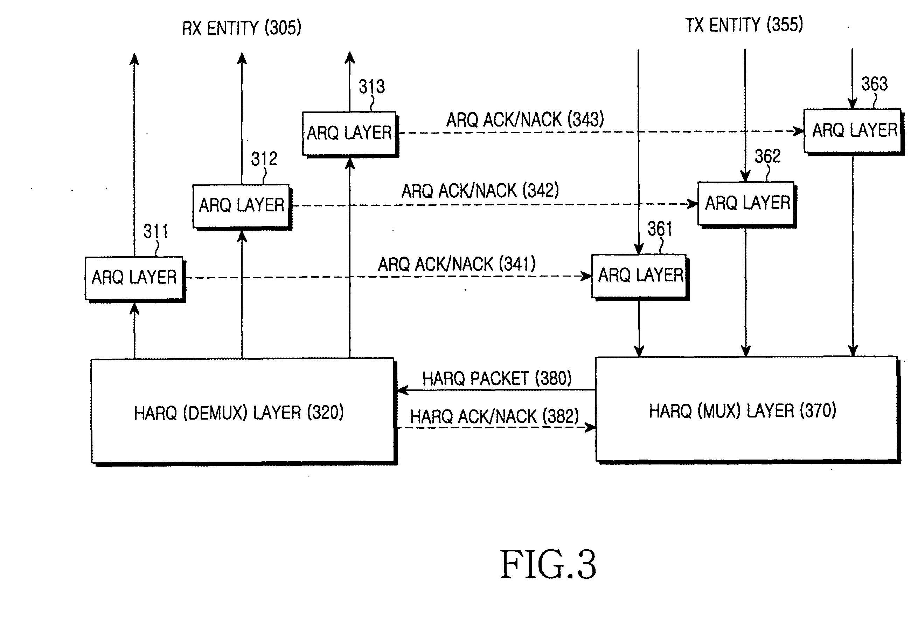

1.2. Because HARQ transmission/retransmission is performed within a relatively short time, the HARQ processor fails to acquire time diversity gain. For example, if a terminal falls in to a deep fading area for several tens of msec, the terminal can hardly successfully transmit an HARQ packet through HARQ retransmission. In order to make up for the limit of the HARQ operation, there is a need to perform an ARQ operation. With reference to FIG. 3, a description will now be made of an operation of performing HARQ with use of ARQ.

FIG. 3 illustrates possible problems occurring when HARQ and ARQ operate independently according to the prior art.

Referring to FIG. 3, an ARQ operation is performed by transmitting ARQ layers 361, 362 and 363 (i.e. ARQ layers in the transmitting entity 355) and receiving ARQ layers 311, 312 and 313 (i.e. ARQ layers in the receiving entity 305). The transmitting ARQ layers 361, 362 and 363 each store an ARQ packet in a retransmission buffer for its possible retransmission, even after transmitting an upper layer packet delivered from an upper layer.

The transmitting ARQ layers 361, 362 and 363 each configure as many ARQ packets as the amount of data that it will transmit for a transmission period. Here, the transmitting ARQ layer can reach the amount of desired transmission data by generating several ARQ packets, or can generate one ARQ packet corresponding to the amount of desired transmission data. If a size of a desired ARQ packet is not identical to a size of the upper layer packet, the transmitting ARQ layer can deliver only a part of the ARQ layer by dividing the upper layer packet, or can deliver a plurality of upper layer packets. Here, the transmitting ARQ layer configures the ARQ packet by inserting sequence number information, size information, and framing information into an upper layer packet. The transmitting ARQ layer stores the ARQ packet in a retransmission buffer for later retransmission after storing it in a lower layer. The lower layer may include a MAC layer, an HARQ layer 370, and a physical layer. The HARQ layer 370 multiplexes the received ARQ packets into an HARQ packet, and then transmits the HARQ packet to the receiving entity over a physical channel, as shown at 380.

The receiving ARQ layers 311, 312 and 313 are each composed of an assembly block, a reception buffer, and a retransmission management block. The physical layer receives an HARQ packet over a physical channel, and a MAC/HARQ layer 320 demultiplexes the received HARQ packet to restore ARQ packets, and delivers the ARQ packets to the corresponding receiving ARQ layers 311, 312 and 313. The reception buffer stores the ARQ packets received from the HARQ layer 320 according to their sequence numbers, and delivers ARQ packets to the assembly block for assembly. The ARQ retransmission management block checks sequence numbers of the ARQ packets stored in the reception buffer, and sends ARQ ACK signals for the normally received ARQ packets and ARQ NACK signals for the reception-failed ARQ packets to the transmitting ARQ layers 361, 362 and 363, as shown at 341, 342 and 343. The ARQ assembly block reconfigures (reassembles) the original upper layer packet with the ARQ packets referring to framing headers of the ARQ packets delivered from the reception buffer, and then delivers the reconfigured upper layer packet to the upper layer.

Upon receiving the response signals (ACK/NACK signals) for the ARQ packets previously transmitted to the receiving ARQ layers 311, 312 and 313, the transmitting ARQ layers 361, 362 and 363 each discard the corresponding ARQ packet from the ARQ retransmission buffer in response to the ACK signal, and schedule retransmission of the corresponding ARQ packet in response to the NACK signal.

As described above, ARQ is performed on an ARQ packet by ARQ packet basis. The transmitting ARQ layers 361, 362 and 363 attach sequence numbers to ARQ packets before transmission, and the receiving ARQ layers 311, 312 and 313 check the sequence numbers of the received ARQ packets to determine whether there are any missing (reception-failed) ARQ packets. For example, if the receiving ARQ layers have normally received an ARQ packet with sequence number #X and an ARQ packet with sequence number #(X+2), but have failed to receive an ARQ packet with sequence number #(X+1), the receiving ARQ layers send a request for retransmission of the ARQ packet with sequence number #(X+1) to the transmitting ARQ layers. That is, the receiving ARQ layers send a NACK signal to the transmitting ARQ layers in response to the ARQ packet with sequence number #(X+1), to issue a request for retransmission of the ARQ packet with sequence number #(X+1).

A description will now be made of an HARQ operation performed independently of the ARQ operation in FIG. 3.

After transmitting an HARQ packet obtained by multiplexing a plurality of ARQ packets, if the transmitting HARQ layer 370 receives an HARQ NACK from the receiving HARQ layer 320, the transmitting HARQ layer 370 retransmits the HARQ packet. That is, upon failure to receive an HARQ ACK, the transmitting HARQ layer 370 repeats this operation as many times as the maximum number of retransmissions. If the transmitting HARQ layer 370 has failed to receive the HARQ ACK even after it has repeated the operation as many times as the maximum number of retransmissions, i.e. if the maximum retransmission limit occurs, the receiving HARQ layer 320 sends an HARQ ACK/NACK, as shown at 382, perceiving the occurrence of the maximum retransmission limit, and the transmitting HARQ layer 370, after receiving the HARQ ACK/NACK, sends a request for retransmission of the corresponding packet to the ARQ layers 361, 362 and 363.

In this case, the transmitting HARQ layer 370 cannot perform retransmission until it receives an ARQ NACK. Therefore, when the HARQ maximum retransmission limit occurs, the transmitting HARQ layer 370 can hardly perform fast retransmission. Also, the receiving ARQ layers 311, 312 and 313 should send NACKs for all reception-failed ARQ packets, causing an increase in the wireless load and the ARQ NACK processing load. In addition, because the receiving ARQ layers 311, 312 and 313 use several types of ARQ ACK/NACKs, packet processing is complex in the ARQ layers. Further, while the HARQ layer 370 attempts retransmission, if the receiving ARQ layer sends a NACK, determining that an arbitrary ARQ packet is missing, then the HARQ layer 370 may perform repeated retransmission on the same ARQ packet. This defect causes deterioration in packet transmission/reception performance.

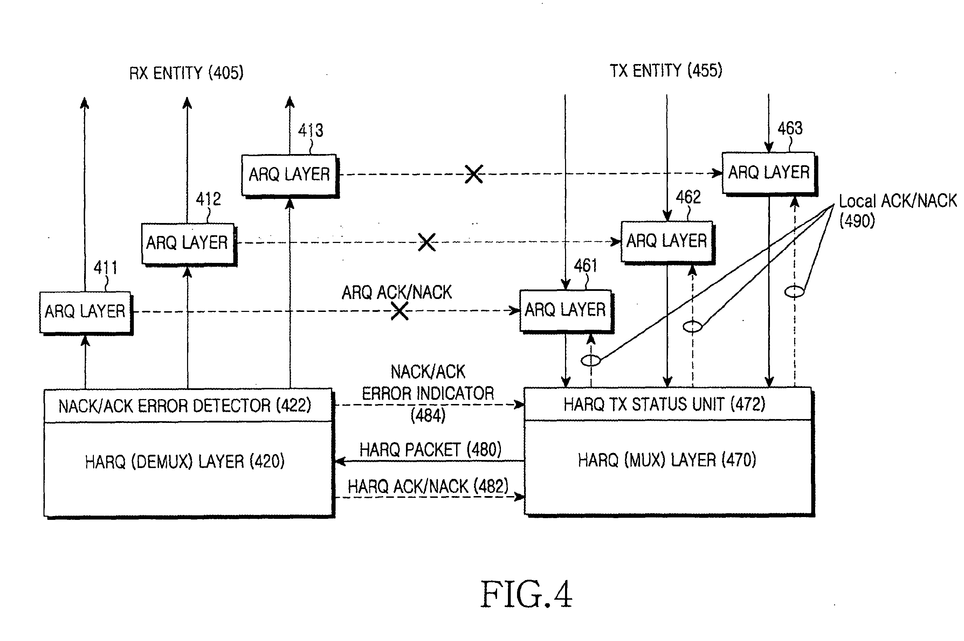

To solve the problem of FIG. 3, the conventional technology proposes a method for efficiently operating an HARQ layer and an ARQ layer, which operate independently, as shown in FIG. 4. That is, a receiving HARQ layer 420 uses a method of providing information on success/failure in packet transmission to transmitting ARQ layers 461, 462 and 463.

Referring to FIG. 4, a transmitting HARQ layer 470 sends transmission failure information (hereinafter 'Local NACK') and transmission success information (hereinafter 'Local ACK') to the transmitting ARQ layers 461, 462 and 463 so that they may determine whether there is a need for retransmission of the corresponding packet. Here, it is characterized that receiving ARQ layers 411, 412 and 413 do not use the ARQ ACK/NACK for the missing packet.

In other words, it is characterized in FIG. 4 that in order to solve the problems of a load caused by an ARQ operation and possible occurrence of a repeated retransmission request due to the use of the HARQ layer, a transmitting entity and a receiving entity doe not perform ARQ. Instead, the receiving HARQ layer 420 performs demultiplexing on the HARQ packet transmitted via the transmitting HARQ layer 470, and the corresponding ARQ layers 411, 412 and 413 perform error check on the received demultiplexed ARQ packets, and deliver the results to the receiving HARQ layer 420.

Therefore, the receiving HARQ layer 420 sends an HARQ NACK signal to the transmitting HARQ layer 470, causing the HARQ layer 470 to perform retransmission.

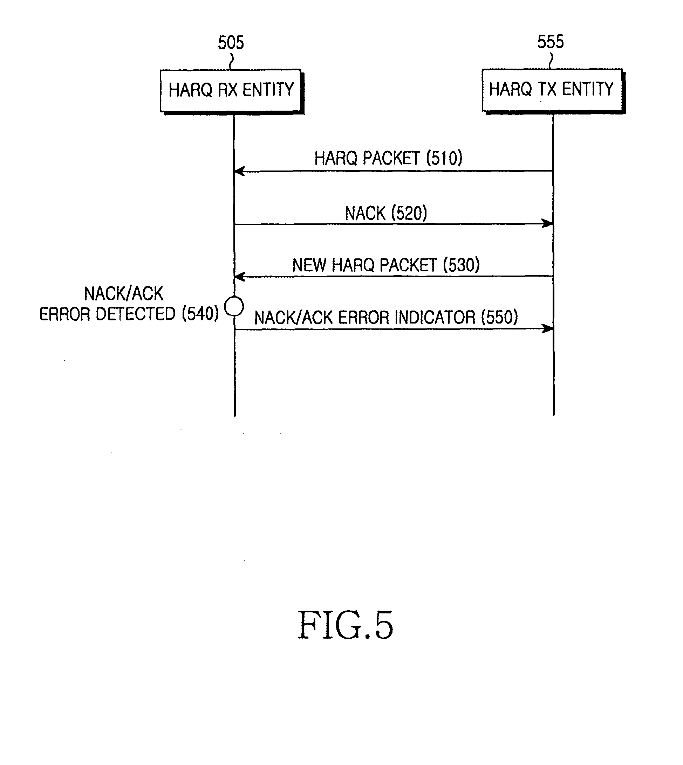

In addition, the receiving HARQ layer 420 performs HARQ NACK/ACK error detection, and if an HARQ NACK is recognized as an HARQ ACK due to its change, i.e. if it is determined that an HARQ NACK/ACK error has occurred, the receiving HARQ layer 420 sends a NACK/ACK error indicator to the transmitting HARQ layer 470. A process of sending the error indicator will be described in FIG. 5.

Finally, upon receipt of a Local ACK from the transmitting HARQ layer 470, the transmitting ARQ layers 461, 462 and 463 can remove the corresponding ARQ packet from a retransmission buffer. However, upon receipt of a Local NACK reported from the transmitting HARQ layer 470, the transmitting ARQ layers 461, 462 and 463 prepare for the retransmission of the corresponding ARQ packet.

FIG. 5 illustrates an operation of detecting a NACK/ACK error according to the prior art.
Referring to FIG. 5, a transmitting HARQ layer (or HARQ transmitting entity) 555 transmits in step 510 an HARQ packet to a receiving HARQ layer (or HARQ receiving entity) 505 over a physical channel. The receiving HARQ layer 505 performs error detection on the received HARQ packet. If there is an error in the received packet, the receiving HARQ layer 505 sends in step 520 an HARQ NACK to the transmitting HARQ layer 555. Even though the receiving HARQ layer 505 has sent the HARQ NACK, if the transmitting HARQ layer 555 transmits a new HARQ packet in step 530 instead of retransmitting the HARQ packet to the receiving HARQ layer 505, the receiving HARQ layer 505 considers in step 540 that a NACK/ACK error has occurred for the previously sent NACK response signal. That is, as the NACK signal for the HARQ packet transmitted in step 510 experiences an error while it is transmitted over a wireless channel, as shown in 520, the transmitting HARQ layer 555 recognizes the NACK signal as an ACK signal, and thus transmits a new HARQ packet in response to the ACK signal in step 530.

Upon detecting the NACK/ACK error in this way, the receiving HARQ layer 505 sends a NACK/ACK error indicator to the transmitting HARQ layer 555 in step 550.

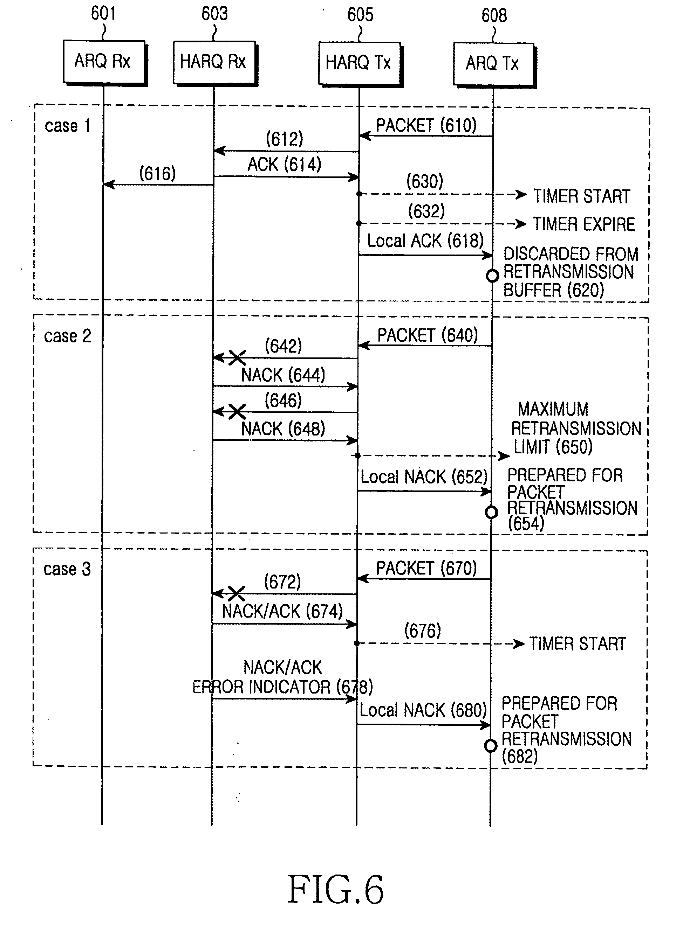

FIG. 6 illustrates possible problems occurring when the conventional HARQ and ARQ operate as described in FIGs. 3 to 5.

Referring to FIG. 6, 'case 1' corresponds to a case in which a receiving ARQ layer 601 normally receives an ARQ packet 610 transmitted by a transmitting ARQ layer 608, as shown at 616. The ARQ packet 610 is delivered to the receiving ARQ layer 601, passing through a transmitting HARQ layer 605 and a receiving HARQ layer 603, as shown at 612 and 616.

After receiving an HARQ ACK indicating normal receipt of the transmitted packet from the receiving HARQ layer 603, as shown at 614, the transmitting HARQ layer 605 starts in step 630 a timer with which it waits for an NACK/ACK error indicator. Thereafter, if the timer expires in step 632, the transmitting HARQ layer 605 reports a Local ACK to the transmitting ARQ layer 608 in step 618.

Upon receipt of the Local ACK reported from the transmitting HARQ layer 605, the transmitting ARQ layer 608 can finally remove the packet from a retransmission buffer in step 620, determining that the corresponding ARQ packet has been normally received at the receiving ARQ layer 601.

'case 2' corresponds to a case in which packet transmission is failed, even though the transmitting HARQ layer 605 has attempted retransmission as many times as the maximum number of retransmissions, as shown at 640 to 650. In this case, the transmitting HARQ layer 605 reports a Local NACK to the transmitting ARQ layer 608 in step 652, and the transmitting ARQ layer 608 prepares to retransmit the corresponding ARQ packet in step 654.

'case 3' corresponds to a case in which an HARQ NACK is misconceived as an HARQ ACK, as shown at 674. After receiving an HARQ ACK, the transmitting HARQ layer 605 starts in step 676 a timer which with which it waits for a NACK/ACK error indicator. Upon receipt of a NACK/ACK error indicator from the receiving HARQ layer 603 in step 678 before expiration of the timer, the transmitting HARQ layer 605 reports a Local NACK to the transmitting ARQ layer 608 in step 680. Upon receipt of the Local NACK, the transmitting ARQ layer 608 prepares to retransmit the corresponding ARQ packet.

2. This method has the following problems, although it has an advantage of not using the ARQ ACK/NACK.

2.1. The HARQ layer is complex in operation because it needs to determine the presence/absence of a NACK/ACK error and perform the corresponding process.

2.2. Even though the receiving HARQ layer 603 has sent an HARQ NACK, if a new HARQ packet is received, the receiving HARQ layer 603 determines that there is a NACK/ACK error. However, if the transmission fails, even though the transmitting HARQ layer 605 has sent the corresponding packet as many times as the maximum number of retransmissions, the transmitting HARQ layer 605 transmits a new HARQ packet. This case can not be distinguished from the case where the NACK/ACK error has occurred.

2.3. Because the transmitting HARQ layer 605 should always report a Local ACK for the successfully transmitted packet, the transmitting HARQ layer 605 and the transmitting ARQ layer 608 both increase in processing overhead.

2.4. There is no detailed scheme for sending the NACK/ACK error indicator.

2.5. There is no scheme for coping with the case where the NACK/ACK error indicator is missing or changes. In the case where the NACK/ACK error indicator is missing, if the timer expires while the transmitting HARQ layer 605 waits for the NACK/ACK error indicator, the transmitting HARQ layer 605 generates a Local ACK, determining that there is no NACK/ACK error.

The detailed schemes for solving the foregoing problems have not yet been proposed in the current mobile communication system. Therefore, there is a need for an efficient packet retransmission method for transmitting high-speed data taking the foregoing problems into account.

## SUMMARY OF THE INVENTION

An aspect of the present invention is to address at least the problems and/or disadvantages set forth above and to provide at least the advantages described below. Accordingly; an aspect of the present invention is to provide an efficient retransmission request apparatus and method for processing high-speed data in a mobile communication system.

Another aspect of the present invention is to provide a retransmission apparatus and method for minimizing the transmission of an ACK signal in a mobile communication system supporting HARQ and ARQ.

According to one aspect of the present invention, there is provided a method for requesting retransmission of high-speed packet data in a receiving Automatic Retransmission reQuest (ARQ) entity of a mobile communication system that simultaneously performs Hybrid Automatic Retransmission reQuest (HARQ) and ARQ. The method includes upon receipt of a packet, determining a sequence number of the received packet, and determining if there is at least one missing packet preceding the received packet; if there is at least one missing packet, driving a first timer which is set to a time required when a number of retransmission attempts reaches a predetermined maximum number of HARQ retransmissions, and monitoring receipt of the missing packet; and upon expiration of the timer, sending to a transmitting ARQ entity an Acknowledgement (ACK) including a last sequence number among sequence numbers of normally received consecutive ARQ packets.

According to another aspect of the present invention, there is provided a method for requesting retransmission of high-speed packet data in a receiving Automatic Retransmission reQuest (ARQ) entity of a mobile communication system that simultaneously performs Hybrid Automatic Retransmission reQuest (HARQ) and ARQ. The method includes upon receipt of a packet, determining if a number of missing ARQ packets is less than a threshold; and when the number of missing ARQ packets is less than the threshold, sending an Acknowledgement (ACK) to a transmitting ARQ entity.

According to further another aspect of the present invention, there is provided an apparatus for requesting retransmission of high-speed packet data in a mobile communication system that simultaneously performs Hybrid Automatic Retransmission reQuest (HARQ) and Automatic Retransmission reQuest (ARQ). The apparatus includes an HARQ entity for reporting a Negative Acknowledgement (NACK) for a missing packet; and a receiving ARQ entity for determining a sequence number of a received packet, driving a timer which is set to a time required when a number of retransmission attempts reaches a predetermined maximum number of HARQ retransmissions if there is at least one missing packet preceding the received packet, and sending to a transmitting ARQ entity an Acknowledgement (ACK) including a last sequence number among sequence numbers of normally received consecutive ARQ packets upon expiration of the timer.

According to yet another aspect of the present invention, there is provided an apparatus for requesting retransmission of high-speed packet data in a mobile communication system that simultaneously performs Hybrid Automatic Retransmission reQuest (HARQ) and Automatic Retransmission reQuest (ARQ). The apparatus includes an HARQ entity for reporting a Negative Acknowledgement (NACK) for a missing ARQ packet; and a receiving ARQ entity for calculating a ratio of missing ARQ packets by determining a next sequence number VR(R) of a highest sequence number among sequence numbers of consecutively received at least one ARQ packets, and sending an Acknowledgement (ACK) to a transmitting ARQ entity when the calculated ratio satisfies a condition for sending an ACK including a last sequence number among sequence numbers of normally received consecutive ARQ packets.

## BRIEF DESCRIPTION OF THE DRAWINGS

The above and other aspects, features and advantages of the present invention will become more apparent from the following detailed description when taken in conjunction with the accompanying drawings in which:

FIGS. 1A and 1B are diagram illustrating a structure of a general radio protocol and a packet structure therefor;
FIG. 2 is a diagram illustrating a general HARQ operation;
FIG. 3 is a diagram illustrating possible problems occurring when HARQ and ARQ operate independently according to the prior art;
FIG. 4 is a diagram illustrating possible problems occurring when HARQ and ARQ operate in an interworking manner according to the prior art;
FIG. 5 is a diagram illustrating an operation of detecting a NACK/ACK error according to the prior art;
FIG. 6 is a diagram illustrating possible problems occurring when HARQ and ARQ operate according to the prior art;
FIG. 7 is a diagram illustrating a concept of driving a timer for retransmission according to the present invention;
FIG. 8 is a diagram illustrating a method of driving a plurality of T2 timers according to a first embodiment of the present invention;
FIG. 9A is a diagram illustrating a process of driving a T2 timer according to the first embodiment of the present invention;
FIG. 9B is a diagram illustrating a process of updating VR(R) according to the first embodiment of the present invention;
FIG. 9C is a diagram illustrating a signal flow for the case where a corresponding timer expires according to the first embodiment of the present invention
FIG. 10 is a diagram illustrating a method of sequentially driving T2 timers according to a second embodiment of the present invention;
FIG. 11A is a diagram illustrating a process of driving a T2 timer according to the second embodiment of the present invention;
FIG. 11B is a diagram illustrating a signal flow for the case where a corresponding timer expires according to the second embodiment of the present invention;
FIG. 12 is a diagram illustrating a process of sending an ACK according to a third embodiment of the present invention;
FIG. 13 is a diagram illustrating a process of transmitting an ACK according to a fourth embodiment of the present invention; and
FIG. 14 is a diagram illustrating a retransmission apparatus supporting interworking between HARQ and ARQ according to the present invention.

## EP 1 855 411 A2

**DETAILED DESCRIPTION OF PREFERRED EMBODIMENTS**

Preferred embodiments of the present invention will now be described in detail with reference to the annexed drawings. In the following description, a detailed description of known functions and configurations incorporated herein has been omitted for clarity and conciseness.

The present invention, as described herein, provides a method for efficiently performing retransmission during high-speed packet data transmission in a mobile communication system, and in particular, provides a method of using a Local NACK between a transmitting HARQ layer and a transmitting ARQ layer, and realizing a simple ARQ operation to solve the complex problem of the transmitting HARQ layer.

During the retransmission operation of the present invention, the reason why a receiving ARQ layer sends an ACK including information on normally received packets for recovery of a missing (reception-failed) ARQ packet is to cope with the occasion in which a corresponding packet is missing due to the occurrence of an HARQ NACK/ACK error. Therefore, the missing ARQ packet will be normally received through HARQ retransmission, the transmission of a Local NACK and the retransmission attempt by a minimized transmission of an ACK between the ARQ layers.

In this environment where HARQ and ARQ operate together, there is a possibility that ARQ packets will be received out of order at the receiving ARQ layer due to the HARQ retransmission. Therefore, there is a need to reduce unnecessary ACK transmissions (or ACK sendings) by delaying the transmission of the ACK used for the recovery of the missing ARQ packet, taking the out-of-order problem into account.

That is, the present invention provides the following three methods capable of minimizing a load between ARQ layers and a load in a wireless environment for ACK processing by minimizing the number of ACK transmissions.

First, the present invention provides a timer-based ACK transmission method.

Second, the present invention provides an ACK transmission method based on the amount of received data (or packets).

Third, the present invention provides a method combining the first method and the second method.

Although the present invention will be described herein as an application to the LTE system, the present invention can also be applied to every mobile communication system performing retransmission through HARQ and ARQ without any modification.

In addition, the present invention provides HARQ and ARQ layers for exchanging ACK signals for recovery of the missing packet. The transmitting entity for retransmission includes an ARQ layer (hereinafter 'ARQ Tx') and an HARQ layer (hereinafter 'HARQ Tx'), and the receiving entity includes HARQ layer (hereinafter 'HARQ Rx') and an ARQ layer (hereinafter 'ARQ Rx'). The term 'layer' as used herein refers to an entity having a hardware or software structure. The layer can be defined to be equal in structure to the entity.

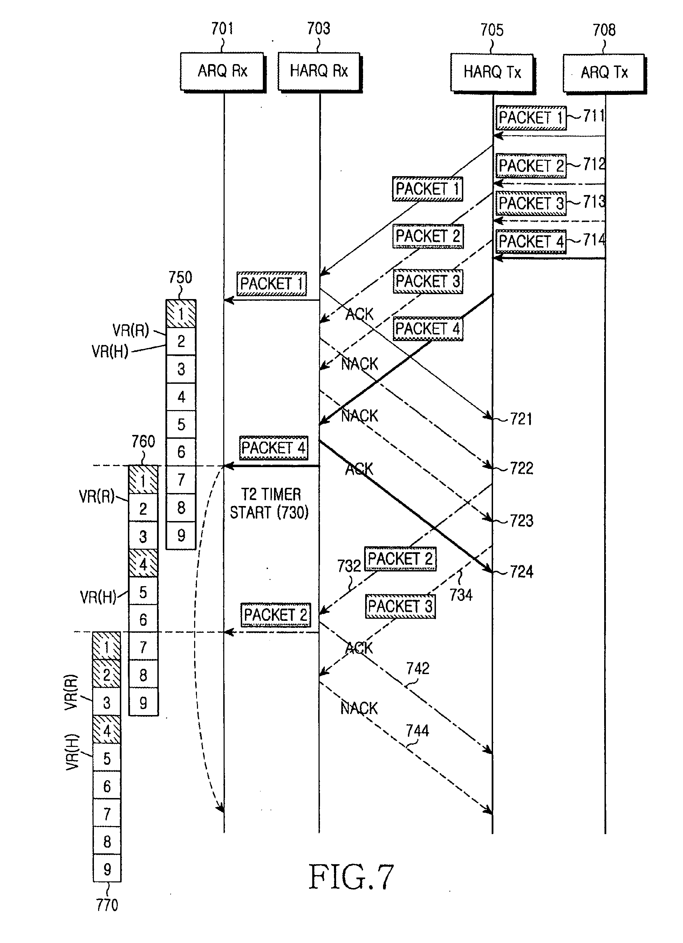

FIG. 7 illustrates a concept of driving a timer for retransmission according to the present invention.

Referring to FIG 7, an ARQ Tx 708 sequentially delivers ARQ packets #1, #2, #3 and #4 to an HARQ Tx 705, as shown at 711, 712, 713 and 714. The ARQ packets #1, #2, #3 and #4 are forwarded to an HARQ Rx 703 over a wireless channel. The HARQ Rx 703 performs an error check on the received ARQ packets #1, #2, #3 and #4, and then sends a response signal to the HARQ Tx 705. For example, the HARQ Rx 703 sends to the HARQ Tx 705 an ACK for the normally received ARQ packet #1, as shown at 721, sends a NACK for the missing ARQ packet #2, as shown at 722, sends a NACK for the missing ARQ packet #3, as shown at 723, and sends an ACK for the normally received ARQ packet #4, as shown at 724. Also, the HARQ Rx 703 forwards the normally received ARQ packet #1 to an ARQ Rx 701. Accordingly, the ARQ Rx 701 updates a reception buffer as shown at 750.

Herein, the ARQ Rx 701, as it manages the reception buffer, uses the following variables.

2.1. VR(R): indicates the next sequence number of the highest sequence number among sequence numbers of consecutively received packets.

2.2. VR(H): indicates the next sequence number of the highest sequence number among received sequence numbers.

In the time shown by 750, in the reception buffer that has normally received the ARQ packet #1, VR(R) has a value of a sequence number 2 and VR(H) also has a value of a sequence number 2.

Thereafter, upon receipt of the ARQ packet #4, the ARQ Rx 701 updates the reception buffer as shown at 760. In this case, VR(R) has a value of a sequence number 2 and VR(H) has a value of a sequence number 5.

Here, there is a high possibility that after the ARQ packet #4 is received, the missing ARQ packets #2 and #3 will be received out of order through HARQ retransmission after a lapse of a predetermined time. That is, in frequent cases, packets may be received after a delay due to HARQ retransmission, like the ARQ packet #2 shown in step 732. The reception buffer for the delayed packet #2 is shown at 770. In this case, VR(R) is updated with a sequence number 3, and VR(H) has a value of a sequence number 5.

Therefore, the ARQ Rx 701, even though there is a missing ARQ packet, secures a certain time (hereinafter 'T2') taking into account its delayed reception due to HARQ retransmission, and then sends an ARQ ACK for recovery of the missing ARQ packet. In other words, the ARQ Rx 701, after receiving the ARQ packet #4, cannot determine the HARQ transmission failure for the packet #3 until the time required when the number of retransmission attempts reaches the maximum number of retransmissions of the transmitting HARQ layer, as shown at 730. This is because even in the case of the HARQ transmission failure, the ARQ Rx 701 can expect that retransmission by the transmitting HARQ Tx 705 and retransmission by the Local NACK in the ARQ layer will be performed in most cases.

Therefore, the ARQ Rx 701 drives a timer for the T2 time to send an ARQ ACK, and if the timer expires with the passage of the T2 time, the ARQ Rx 701 sends an ARQ ACK to the ARQ Tx 708. This prevents excessive ARQ ACK exchange, contributing to a decrease in the load due to the retransmission in the wireless environment. Herein, a value of the T2 timer should be set to at least the time required when the number of retransmission attempts reaches the maximum number of retransmissions of the HARQ Tx 705, and to an appropriate value determined by taking into account the retransmission in the ARQ layer by the Local NACK between the HARQ Tx 705 and the ARQ Tx 708.

A detailed description of a method for efficiently transmitting an ACK by driving a timer, i.e. in the first method, will now be made with reference to a first embodiment and a second embodiment. The first ACK transmission method will now be described with reference to FIGs. 7 to 11.

First Embodiment

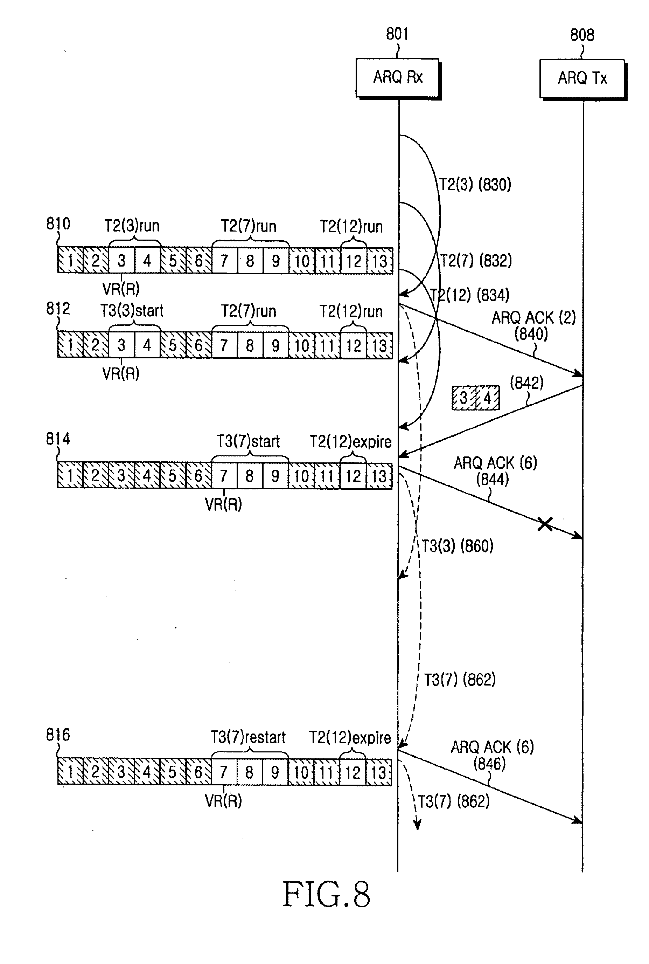

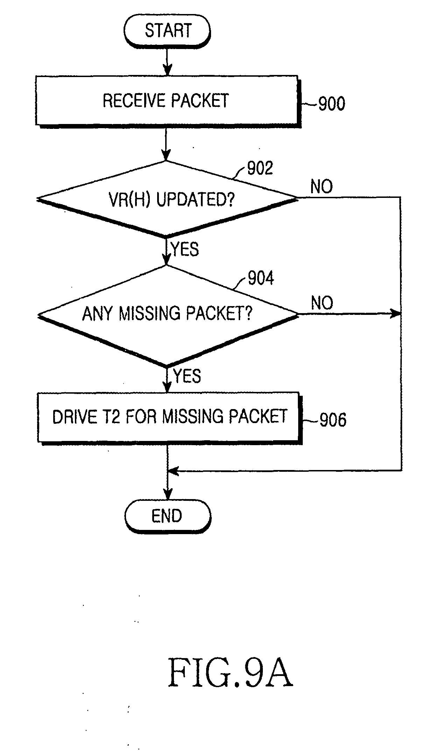

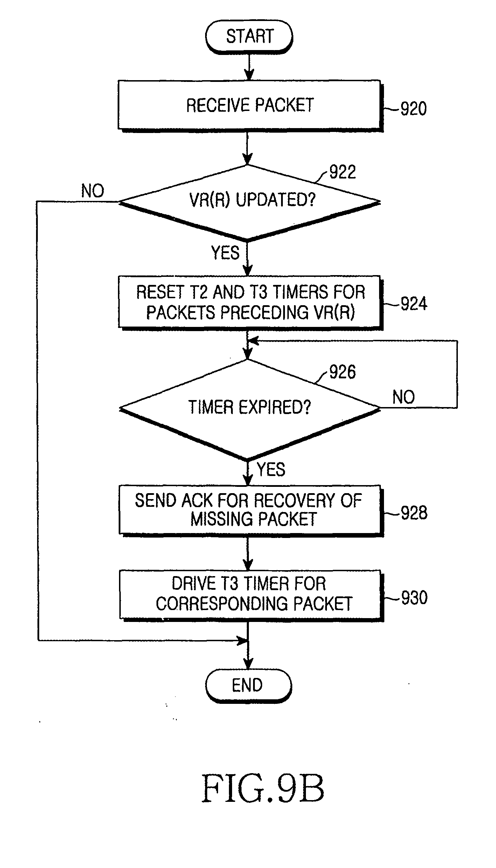

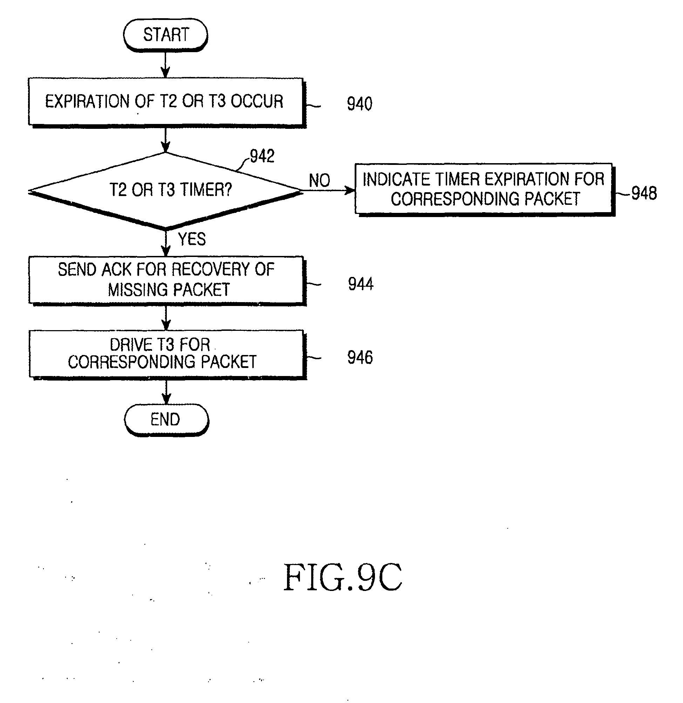

FIG. 8 illustrates an example of driving T2 timers in units of the bundle of all consecutive missing ARQ packets, and FIGs. 9A, 9B and 9C illustrate processes for the case where the T2 timer is driven in units of ARQ packets according to FIG. 8.

FIG. 8 illustrates a method of driving multiple T2 timers according to the first embodiment of the present invention.

Referring to FIG. 8, as can be understood from a reception buffer 810 of an ARQ Rx 801, the ARQ Rx 801 has failed to normally receive an ARQ packet composed of packets #3 and #4, an ARQ packet composed of packets #7, #8 and #9, and an ARQ packet composed of a packet #12. At this time, VR(R) has a value of a sequence number 3.

The ARQ Rx 801 drives the T2 timer separately for packets #3 and #4; packets #7, #8 and #9; and packet #12. For example, the ARQ Rx 801 drives a T2(3) timer for the missing packets #3 and #4 upon receipt of a packet #5, i.e. at step 830. The ARQ Rx 801 drives a T2(7) timer for the missing packets #7, #8 and #9 upon receipt of a packet #10, i.e. at step 832. Also, the ARQ Rx 801 drives a T2(12) timer for the missing packet #12 upon receipt of a packet #13, i.e. at step 834. That is, if the ARQ Rx 801 has failed to receive the corresponding ARQ packets when the T2(3), T2(7) and T2(12) timers expire, the ARQ Rx 801 first meets a possible ACK transmission condition. Therefore, if VR(R) corresponds to the packet #3 and the T2(3) timer expires, the ARQ Rx 801 sends an ARQ ACK (2) with ACK sequence number 2 to an ARQ Tx 808 at step 840 for reception of the packets #3 and #4.

In step 842, upon receipt of the retransmitted packets #3 and #4, the ARQ Rx 801 updates VR(R) with a packet #7, and determines whether to transmit an ACK for reception of the packets #7, #8 and #9. A status of the reception buffer based on step 842 is shown by reference numeral 814.

If the T2(7) timer, i.e. the time the ARQ Rx 801 determines whether to send an ACK for reception of the packets #7, #8 and #9, has already expired, the ARQ Rx 801 sends an ARQ ACK (6) with ACK sequence number 6 for reception of the packets #7, #8 and #9 in step 844. That is, the ARQ Rx 801, in sending an ARQ ACK, checks update of VR(R), determines if the timer driven for the T2 time has expired, and then sends an ARQ ACK with information on the normally received packets.

The ARQ Rx 801 can further drive a T3 timer after sending the ARQ ACK at the corresponding time. The T3 timer is characterized in that it is driven in preparation for the case where the transmitted ARQ ACK is missing, or the case where the ARQ packet retransmitted by the transmitted ACK is failed to be received due to an HARQ NACK/ACK error.

Therefore, the ARQ Rx 801 drives the T3 timer while sending the ARQ ACK. For example, the ARQ Rx 801 drives the T3 timer in step 860 in response to the ARQ ACK (2) of step 840, and drives the T3 timer in step 862 in response to the ARQ ACK (6) of step 844. If VR(R) is not updated even after expiration of the T3 timer, the ARQ Rx 801 retransmits the ARQ ACK in step 846. A value of the T3 timer can be set herein to the time required when the ARQ Rx 801 sends an ARQ ACK and receives an ARQ packet retransmitted in response the ARQ ACK.

FIG. 9A illustrates a process of driving a T2 timer according to the first embodiment of the present invention. FIG. 9B illustrates ACK transmission for the case where VR(R) is updated according to the first embodiment of the present invention. FIG. 9C illustrates a signal flow for the case where a corresponding timer expires according to the first embodiment of the present invention.

Referring to FIG. 9A, an ARQ Rx 801 receives a packet in step 900, and updates VR(H) according to the received packet in step 902. Here, VR(H) is a variable indicating the next sequence number of the highest sequence number among received sequence numbers. That is, the ARQ Rx 801 updates a reception buffer by checking a sequence number of the received packet. The ARQ Rx 801 determines in step 904 if there are any missing packets between the previously received VR(H) value and the current VR(H) value. For example, for the buffer statuses 760 and 750 of FIG. 7, VR(H) is 5 in the buffer status 760 and VR(H) is 2 in the buffer status 750. As a result, the ARQ Rx 801 can determine that there are missing packets #2 and #3.

The ARQ Rx 801 can determine the missing packets by checking VR(H) for the previously received packet from VR(H) for the last received packet. In step 906, the ARQ Rx 801 drives a T2 timer for sending a reliable ACK in order to receive the missing packet.

Referring to FIG. 9B, the ARQ Rx 801 receives a packet in step 920, and determines in step 922 if VR(R) is updated according to the received packet. Herein, VR(R) is a variable indicating the next sequence number of the highest sequence number among sequence numbers of consecutively received packets. In step 924, the ARQ Rx 801 resets a T2 timer and/or a T3 timer for the packets preceding the packet with VR(R). The ARQ Rx 801 determines in step 926 if the T2 timer has expired for the packet corresponding to VR(R). If it is determined in step 926 that the T2 timer has expired, the ARQ Rx 801 sends in step 928 to an ARQ Tx an ACK including the last sequence number among sequence numbers of the normally received consecutive packets, for recovery of a missing packet. In step 930, the ARQ Rx 801 drives the T3 timer to prepare for the case where the ACK is missing, or the ARQ packet retransmitted by the ACK is failed to be received due to an HARQ NACK/ACK error. However, if it is determined in step 926 that the T2 timer has not expired, the ARQ Rx 801 returns to step 926 where it continues the monitoring until the corresponding timer expires.

Referring to FIG. 9C, if expiration of the T2 timer or the T3 timer occurs in step 940, the ARQ Rx 801 determines in step 942 whether the expired timer is the T2 timer or T3 timer of the packet corresponding to VR(R). If the expired timer is the T2 timer or T3 timer of the packet corresponding to VR(R), the ARQ Rx 801 proceeds to step 944 where it sends to the ARQ Tx an ACK including the last sequence number among the sequence numbers of the normally received consecutive packets, for recovery of the missing packet. In step 946, the ARQ Rx 801 drives the T3 timer according to the packet. This is to prevent the ACK corresponding to the packet from being missed, or prevent an error from occurring due to an HARQ NACK/ACK error for the retransmitted ARQ packet.

However, if it is determined in step 942 that the expired timer is not the T2 timer or T3 timer of the packet corresponding to VR(R), the ARQ Rx 801 proceeds to step 948 where it indicates expiration of the timer.

Second Embodiment

In the second embodiment, a description will be made of an ACK transmission method of driving one timer in units of consecutive missing packets.

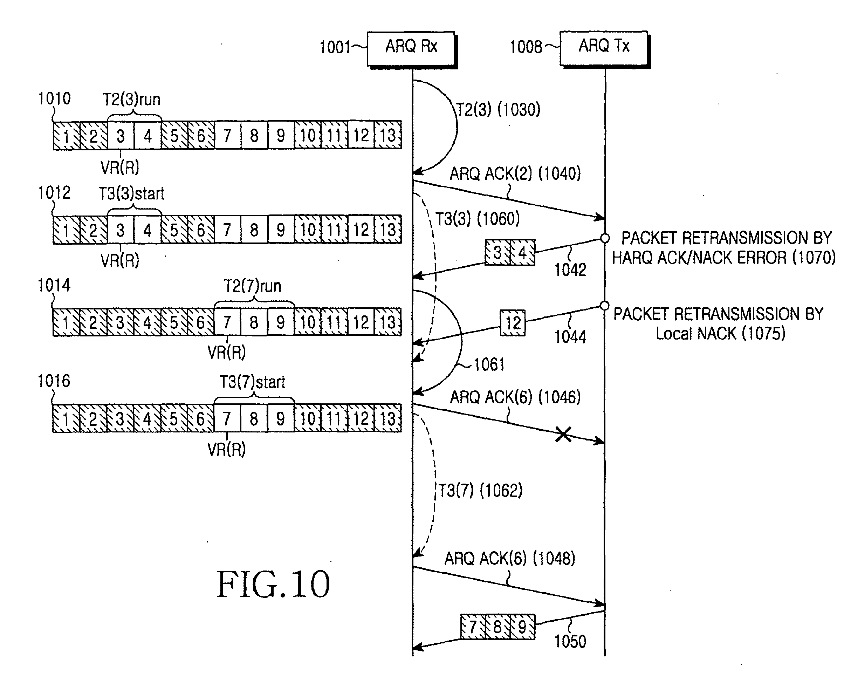

FIG. 10 illustrates a method of sequentially driving one T2 timer in units of the bundle of consecutive missing ARQ packets according to the second embodiment of the present invention.

Referring to FIG. 10, as can be understood from a reception buffer 1010 of an ARQ Rx 1001, the ARQ Rx 1001 has failed to normally receive an ARQ packet composed of packets #3 and #4, an ARQ packet composed of packets #7, #8 and #9, and an ARQ packet composed of a packet #12. At this time, VR(R) has a value of a sequence number 3.

In step 1030, the ARQ Rx 1001 drives only a T2(3) timer for the packet #3 corresponding to VR(R) and its succeeding missing packet #4. If the ARQ Rx 1001 has failed to receive the packets #3 and #4 until the T2(3) timer expires, the ARQ Rx 1001 sends in step 1040 an ARQ ACK (2) including an ACK sequence number 2 to an ARQ Tx 1008 for retransmission of the packets #3 and #4. In step 1060, the ARQ Rx 1001 drives a T3(3) timer in preparation for missing of the ARQ ACK (2), or occurrence of an HARQ NACK/ACK error for the retransmitted ARQ packet. During driving of the T3(3) timer, a status of an ARQ reception buffer is shown by reference numeral 1012 and VR(R) has a value of a sequence number 3 as shown in the buffer reference numeral 1012.

During driving of the T3(3) timer, the ARQ Rx 1001 receives in step 1042 the packets #3 and #4 which are retransmitted at step 1070 from the ARQ Tx 1008 as it is determined that they experience an HARQ NACK/ACK error. After the reception of the packets #3 and #4, VR(R) is updated with a packet #7, but the packets #7, #8 and #9 have not been received. At this time, a status of the reception buffer is shown by reference numeral 1014, and VR(R) has a value of a sequence number 7. In step 1061, the ARQ Rx 1001 determines whether to send an ACK by driving a T2(7) timer for the packets #7, #8 and #9. In step 1044, the ARQ Rx 1001 receives the packet #12 retransmitted at step 1075 by a Local NACK from the ARQ Tx 1008.

In step 1046, if the T2(7) timer expires, the ARQ Rx 1001 sends an ARQ ACK (6) with ACK sequence number 6 for reception of the packets #7, #8 and #9. At this time, a status of the ARQ reception buffer is shown by reference numeral 1016, and VR(R) has a value of a sequence number 7. In step 1062, the ARQ Rx 1001 drives a T3(7) timer. In step 1048, the ARQ Rx 1001 resends the ARQ ACK (6) with ACK sequence number 6 if the packets #7, #8 and #9 have not yet received even though the T3(7) timer has expired. In step 1050, the ARQ Rx 1001 normally receives the packets #7, #8 and #9 retransmitted from the ARQ Tx 1008.

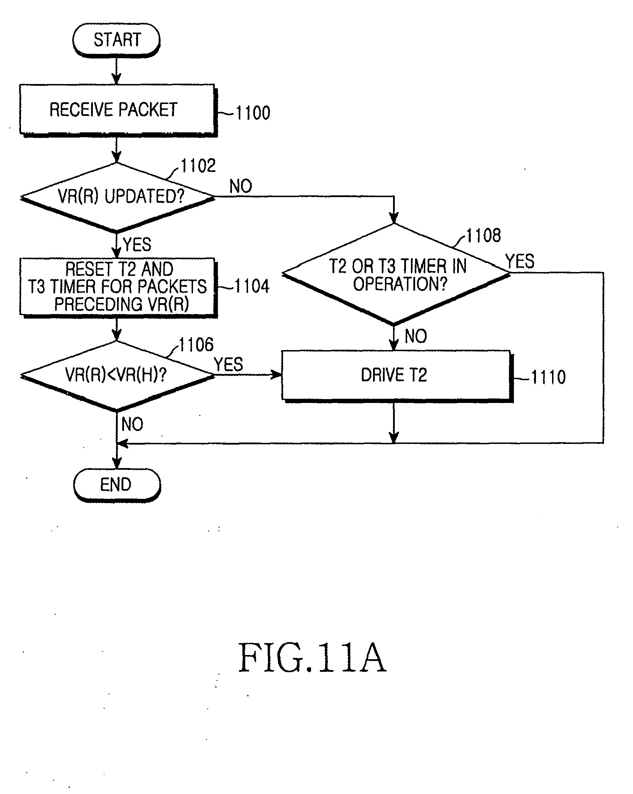

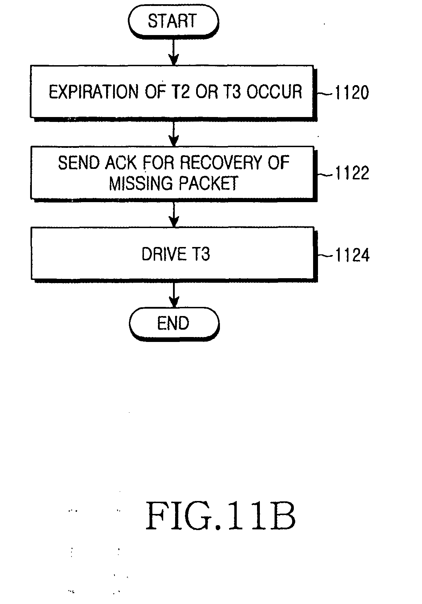

FIG. 11A illustrates a process of driving a T2 timer according to the second embodiment of the present invention, and FIG. 11B illustrates a signal flow for the case where a corresponding timer expires according to the second embodiment of the present invention.

Referring to FIG. 11A, an ARQ Rx 1001 receives a packet in step 1100, and determines in step 1102 whether VR(R) is updated according to the received packet. Herein, -VR(R) is a variable indicating the next sequence number of the highest sequence number among the sequence numbers of the consecutively received packets. If it is determined that VR(R) is updated according to the received packet, the ARQ Rx 1001 resets in step 1104 a T2 timer and/or T3 timer for the packets preceding the packet with VR(R). In step 1106, the ARQ Rx 1001 determines if VR(R) has a value less than that of VR(H). Herein, VR(R) indicates the next sequence number of the highest sequence number among the sequence numbers of the consecutively received packets, and VR(H) indicates the next sequence number of the highest sequence number among the received sequence numbers. That is, the ARQ Rx 1001 can determine sequence numbers of missing packets by comparing VR(R) with VR(H). Upon detecting presence of missing packets, the ARQ Rx 1001 proceeds to step 1110 where it drives the T2 timer associated with the corresponding packet.

If it is determined in step 1102 that VR(R) remains unchanged, the ARQ Rx 1001 determines in step 1108 whether the T2 timer or T3 timer is in operation for the packet corresponding to VR(R). If the T2 timer or T3 timer is not in operation according to VR(R), the ARQ Rx 1001 proceeds to step 1110 where it drives the timer. However, if the T2 timer or T3 timer is in operation according to VR(R), the ARQ Rx 1001 waits until the corresponding timer expires.

Referring to FIG. 11B, if expiration of the T2 timer or T3 timer occurs in step 1120, the ARQ Rx 1001 proceeds to step 1122 where it sends to an ARQ Tx 1008 an ACK including the last sequence number among the normally received consecutive packets for recovery of a missing packet. In step 1124, the ARQ Rx 1001, after sending the ACK, drives the T3 timer to prevent the ACK from being missed, or prevent an error from occurring due to an HARQ NACK/ACK error for the retransmitted ARQ packet.

<u>Third Embodiment</u>

In the mobile communication system, the amount of received data varies according to conditions of the wireless environment, a QoS level of the corresponding service, the amount of wireless resources depending on the number of accessed terminals (or users), and the like. If the transmitting ARQ layer does not have sufficient transmission data, the amount of received data of the receiving ARQ layer decreases regardless of the factors mentioned above. Therefore, it is inefficient to send an ACK simply based on the amount of received data. Accordingly, in the third embodiment, a description will be made of a method for sending an ACK depending on the amount of received data.

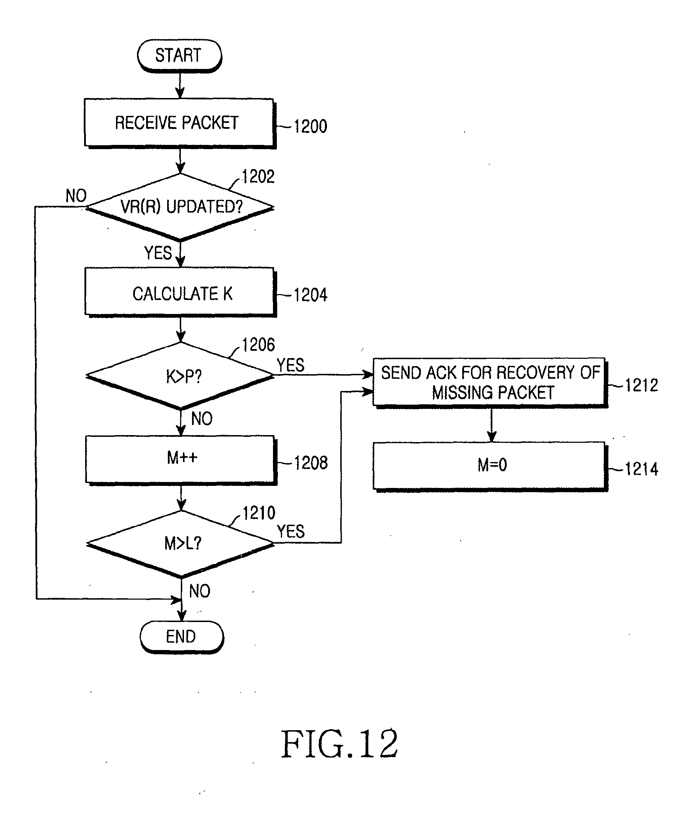

FIG. 12 illustrates a process of sending an ACK with the use of a counter according to the third embodiment of the present invention.

Referring to FIG. 12, an ARQ Rx receives a packet in step 1200, and determines in step 1202 if VR(R) is updated according to the received packet. VR(R) is a variable indicating the next sequence number of the highest sequence number among sequence numbers of consecutively received packets. In step 1204, the ARQ Rx calculates a K value using a variable VR(H) indicating the next sequence number of the highest sequence number among the received sequence numbers and a variable VR(R) indicating the next sequence number of the highest sequence number among the sequence numbers of the consecutively received packets. Herein, K is a variable determined by Equation (1):

$$\text{K} = \text{number of ARQ packets received between VR(R) and VR(H)}/(\text{ VR(H) - VR(R)}) \quad \ldots\ldots(1)$$

In step 1206, if K is greater than a predetermined ACK transmission limit 'P' determined according to service parameters, the ARQ Rx proceeds to step 1212 where it sends an ACK for recovery of missing packets. That is, the ARQ Rx sends an ACK if VR(R) is not updated even though VR(R) satisfies K>P.

However, if K is less than or equal to P, the ARQ Rx proceeds to step 1208 where it does not transmit an ACK. In this regard, the ARQ Rx counts the number of non-ACK transmissions. Here, the count is defined as 'M'. In step 1210, the ARQ Rx determines if the number 'M' of non-ACK transmissions is greater than a limit 'L' for ACK transmission. That is, if the number 'M' of non-ACK transmissions reaches a predefined number, the ARQ Rx proceeds to step 1212 where it sends to an ARQ Tx an ACK including the last sequence number among the sequence numbers of the normally received consecutive packet for recovery of missing packets. Due to the ACK transmission, the ARQ Rx resets in step 1214 the number 'M' of non-ACK transmissions.

The third embodiment variably sends an ACK including the last sequence number among the sequence numbers of the normally received consecutive packet for recovery of missing packets according to channel status or QoS level of the ARQ Rx. The present invention determines whether to send an ACK depending on the value of K determined by Equation (1), i.e. a ratio of missing ARQ packets.

Fourth Embodiment

The fourth embodiment is provided for monitoring a T2 timer. The actual ACK transmission is determined depending on the K value. Therefore, the fourth embodiment is characterized by further including a procedure for determining whether a K>P condition is satisfied when the ACK transmission condition is satisfied according to FIG. 8 or 10.

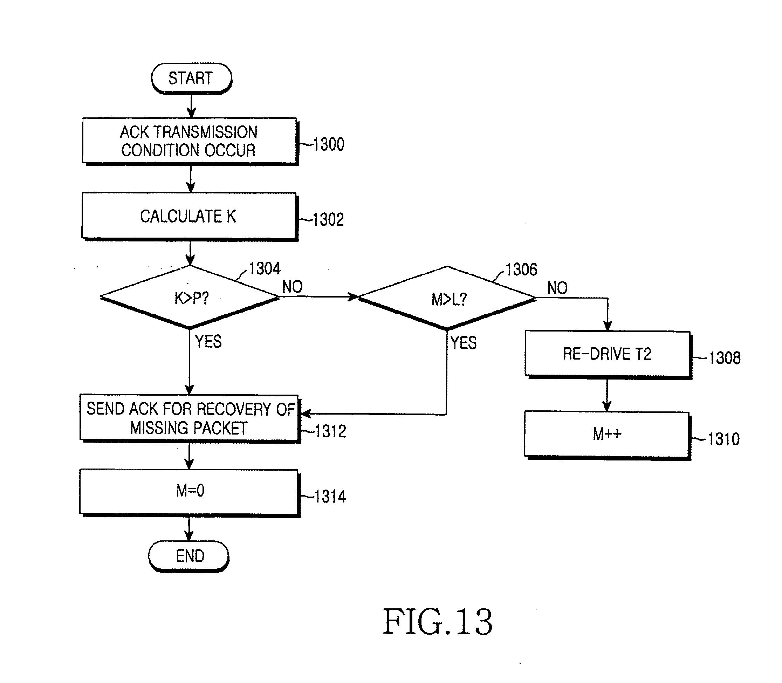

FIG. 13 illustrates a process of transmitting an ACK depending on a K value with the use of a timer according to the fourth embodiment of the present invention.

Referring to FIG. 13, an ARQ Rx determines in step 1300 that an ACK transmission condition occurs as a T2 timer expires. In step 1302, the ARQ Rx calculates a K value using a variable VR(H) indicating the next sequence number of the highest sequence number among the received sequence numbers and a variable VR(R) indicating the next sequence number of the highest sequence number among the sequence numbers of the consecutively received packets. Herein, K is determined according to Equation (1).

In step 1304, if K is greater than a predetermined ACK transmission limit 'P' determined according to service, the ARQ Rx proceeds to step 1312 where it sends an ACK for recovery of missing if the number 'M' of non-ACK transmissions is greater than the limit 'L' having a value which is variable according to service type. If M reaches the ACK transmission limit 'L', the ARQ Rx proceeds to step 1312 where the ARQ Rx sends an ACK for recovery of missing packets. Due to the ACK transmission, the ARQ Rx resets in step 1314 the number 'M' of non-ACK transmissions to '0'.

However, if M does not satisfy the predetermined limit 'L', the ARQ Rx re-drives the T2 timer in step 1308, and then increases M by 1 in step 1310.

As described above, the fourth embodiment uses 'K' as an ACK transmission condition, and re-drives the T2 timer without sending the ACK if the K condition is not satisfied. If there is no ACK transmission even after this process is repeated L times, this embodiment sends the ACK unconditionally. The L is set according to service type. That is, at the time the driven T2 timer has expired, if VR(R) is not updated even though K is greater than P, there is a higher probability that an HARQ NACK/ACK error has occurred. On the contrary, a decrease in K increases a probability that an HARQ frame will be missing due to a poor wireless environment. Therefore, the ARQ Rx repeatedly operates the T2 timer to secure the time for HARQ retransmission and retransmission by a Local NACK.

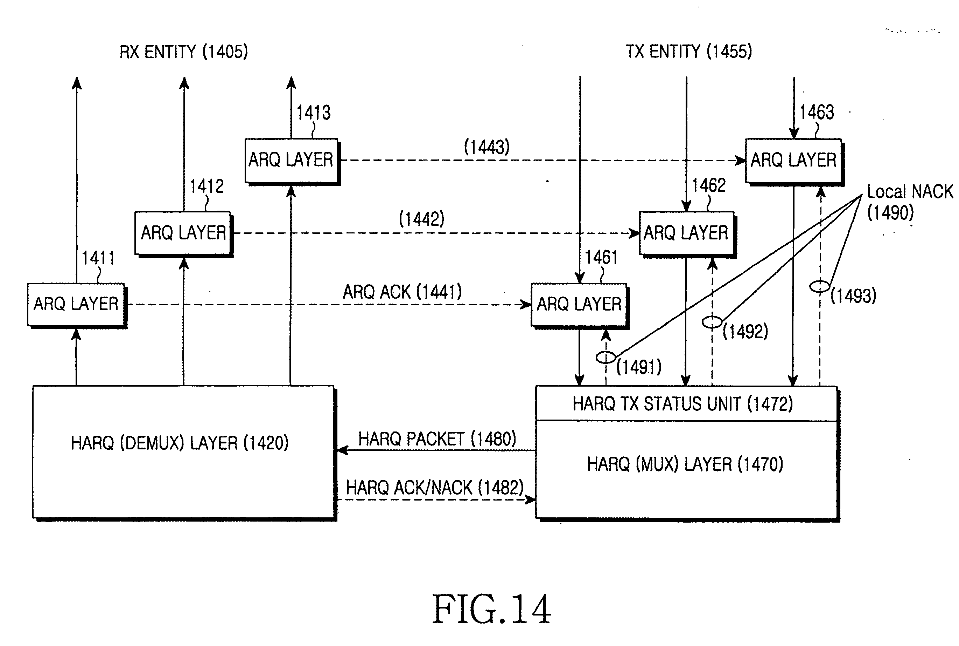

FIG. 14 illustrates a retransmission apparatus supporting interworking between HARQ and ARQ according to the present invention.

Referring to FIG. 14, a transmitting HARQ layer 1470 sends, in steps 1491, 1492 and 1493, a Local NACK 1490, or transmission failure information, to transmitting ARQ layers 1461, 1462 and 1463 so that they may determine whether to retransmit the corresponding packet.

More specifically, ARQ packets delivered from at least one of the ARQ layers 1461, 1462 and 1463 are delivered to the transmitting HARQ layer 1470. The transmitting HARQ layer 1470 configures an HARQ packet in a predetermined size by multiplexing the ARQ packets. The HARQ packet can include one ARQ packet, or can be configured with more than one ARQ packets. The present invention is characterized in that the HARQ layer 1470 performs HARQ on an ARQ packet by ARQ packet basis. This is to minimize the delay due to processing between the HARQ layer 1470 and the ARQ layers 1461, 1462 and 1463, by performing retransmission according to ARQ packet. The transmitting HARQ layer 1470 transmits the configured HARQ packet to a receiving HARQ layer 1420 over a physical channel as shown at 1480.

The receiving HARQ layer 1420 demultiplexes the received HARQ packet into ARQ packets, and delivers the demultiplexed ARQ packets to their corresponding ARQ layers 1411, 1412 and 1413. The ARQ layers 1411, 1412 and 1413 each perform error check on the received ARQ packets, and then deliver the results to the receiving HARQ layer 1420. The receiving HARQ layer 1420 sends a NACK signal to the transmitting HARQ layer 1470 for the errored packet as shown at 1482.

The transmitting HARQ layer 1470 performs retransmission according to a predetermined maximum retransmission limit value, and then reports a Local NACK to a corresponding transmitting ARQ layer (one of the ARQ layers 1461, 1462 and 1463) that has processed the corresponding ARQ packet, if the number of retransmissions for the identical packet exceeds the predetermined maximum retransmission limit value. Upon receipt of the Local NACK reported from the transmitting HARQ layer 1470, the corresponding transmitting ARQ layer (one of the ARQ layers 1461, 1462 and 1463) prepares to retransmit the corresponding ARQ packet, as shown at 1441, 1442 and/or 1443.

Regarding this HARQ operation, the present invention is characterized in that the receiving ARQ layers 1411, 1412 and 1413 send an ACK to the transmitting ARQ layer only for the normally received ARQ packet. Here, the receiving ARQ layers 1411, 1412 and 1413 deliver an ACK including the last sequence number among the sequence numbers of the normally received consecutive ARQ packets to the transmitting ARQ layers 1461, 1462 and 1463.

In transmitting the ACK, the receiving ARQ layer drives at least one timer according to the first or second embodiment, and sends an ACK if the corresponding timer expires. Alternatively, according to the third embodiment, the receiving ARQ layer sends an ACK depending on the amount of received data. Also; according to the fourth embodiment, the receiving ARQ layer drives a timer, and then sends an ACK when the condition based on the ratio of missing packets is satisfied depending on the amount of received data.

As is apparent from the foregoing description, the present invention uses only a Local NACK between the transmitting HARQ layer and the transmitting ARQ layers, and the transmitting HARQ layer and the transmitting ARQ layers send only an ACK, thereby contributing to a reduction in interfacing load between the layers. In addition, the present invention minimizes transmission request for ARQ packets, thereby reducing a load in the wireless environment and thus facilitating high-speed wireless data communication.

While the invention has been shown and described with reference to a certain preferred embodiment thereof, it will be understood by those skilled in the art that various changes in form and details may be made therein without departing from the spirit and scope of the invention as defined by the appended claims.

**Claims**

1. A method for requesting a retransmission of high-speed packet data in a receiving Automatic Retransmission reQuest (ARQ) entity of a mobile communication system that simultaneously performs Hybrid Automatic Retransmission reQuest (HARQ) and ARQ, the method comprising:

   upon receipt of a packet, determining a sequence number of the received packet, and determining if there is at least one missing packet preceding the received packet;
   if there is at least one missing packet, driving a first timer which is set to a time required when a number of retransmission attempts reaches a predetermined maximum number of HARQ retransmissions, and monitoring receipt of the missing packet; and
   upon expiration of the timer, sending to a transmitting ARQ entity an Acknowledgement (ACK) including a last sequence number among sequence numbers of normally received consecutive ARQ packets.

2. The method of claim 1, wherein the determining step comprises:

   updating a current next sequence number VR(H) to a highest sequence number among sequence numbers of received packets; and
   determining if there is at least one missing packet between the current VR(H) and a previous next sequence number VR(H) of a highest sequence number among sequence numbers of previously received packets.

3. The method of claim 1, further comprising:

   after expiration of the timer, determining from the received packet if a next sequence number VR(R) of a highest sequence number among sequence numbers of consecutively received packets is updated;
   resetting the timer when the VR(R) is updated; and
   re-driving the first timer when the VR(R) is less than the previous VR(H).

4. The method of claim 1, further comprising:

   upon sending the ACK, driving a second timer which is set to a time required when the receiving ARQ entity sends an ACK and then receives an ARQ packet retransmitted in response thereto, thereby monitoring receipt of a retransmitted ARQ packet; and
   resending an ACK when VR(R) is not updated even after the second timer has expired.

5. The method of claim 1, wherein the step of monitoring receipt of the missing packet comprises:

   when there more than two nonconsecutive missing packets, driving more than two first timers associated with the nonconsecutive missing packets.

6. The method of claim 5, wherein the sending of an ACK comprises:

   when at least one of the first timers expires, determining if the expired first timer is a first timer of a packet corresponding to the VR(R); and
   when the expired first timer is a first timer of a packet corresponding to the VR(R), sending to the transmitting ARQ entity an ACK including a last sequence number among sequence numbers of normally received consecutive ARQ packets.

7. The method of claim 4, wherein the step of monitoring receipt of a retransmitted ARQ packet comprises:

   when there are more than two consecutive missing packets, driving more than two second timers associated with the consecutive missing packets.

8. The method of claim 1, further comprising:

   after expiration of the first timer, determining if a number of missing ARQ packets is less than a predetermined reference; and
   when the number of missing ARQ packets is less than the predetermined reference, sending an ACK to the transmitting ARQ entity.

9. The method of claim 8, wherein the step of determining whether an number of missing ARQ packets is less than a predetermined reference comprises:

   determining whether a ratio of ARQ packets received between an VR(H) and an VR(R) exceeds a predetermined ACK transmission threshold.

10. The method of claim 8, further comprising:

    counting the missing ARQ packets, and determining if the count value is greater than or equal to a predetermined reference; and
    when the count value is greater than or equal to the predetermined reference, sending an ACK to the transmitting ARQ entity.

11. A method for requesting retransmission of high-speed packet data in a receiving Automatic Retransmission reQuest (ARQ) entity of a mobile communication system that simultaneously performs Hybrid Automatic Retransmission reQuest (HARQ) and ARQ, the method comprising:

    upon receipt of a packet, determining if a number of missing ARQ packets is less than a predetermined reference; and
    when the number of missing ARQ packets is less than the predetermined reference, sending an Acknowledgement (ACK) to a transmitting ARQ entity.

12. The method of claim 11, wherein the determining step comprises:

    determining if a ratio of ARQ packets received between a variable VR(H) indicating a next sequence number of a highest sequence number among sequence numbers of received packets and a variable VR(R) indicating a next sequence number of a highest sequence number among sequence numbers of consecutively received packets exceeds a predetermined ACK transmission threshold.

13. The method of claim 11, further comprising:

    counting the missing ARQ packets, and determining if the count value is greater than or equal to a predetermined reference; and
    when the count value is greater than or equal to the predetermined reference, sending an ACK to the transmitting ARQ entity.

14. An apparatus for requesting retransmission of high-speed packet data in a mobile communication system that simultaneously performs Hybrid Automatic Retransmission reQuest (HARQ) and Automatic Retransmission reQuest (ARQ), the apparatus comprising:

    an HARQ entity for reporting a Negative Acknowledgement (NACK) for a missing packet; and
    a receiving ARQ entity for determining a sequence number of a received packet, driving a timer which is set to a time required when a number of retransmission attempts reaches a predetermined maximum number of HARQ retransmissions if there is at least one missing packet preceding the received packet, and upon expiration of the timer sending to a transmitting ARQ entity an Acknowledgement (ACK) including a last sequence number among sequence numbers of normally received consecutive ARQ packets.

**15.** An apparatus for requesting retransmission of high-speed packet data in a mobile communication system that simultaneously performs Hybrid Automatic Retransmission reQuest (HARQ) and Automatic Retransmission reQuest (ARQ), the apparatus comprising:

an HARQ entity for reporting a Negative Acknowledgement (NACK) for a missing ARQ packet; and
a receiving ARQ entity for calculating a ratio of missing ARQ packets by determining a next sequence number VR(R) of a highest sequence number among sequence numbers of consecutively received at least one ARQ packets, and sending an Acknowledgement (ACK) to a transmitting ARQ entity when the calculated ratio satisfies a condition for sending an ACK including a last sequence number among sequence numbers of normally received consecutive ARQ packets.

| UPPER LAYER 1 | ~110 |

| UPPER LAYER 2 | ~115 |

| ARQ LAYER | ~120 |

| ARQ LAYER | ~125 |

| MAC LAYER (HARQ) | ~130 |

| PHYSICAL LAYER | ~140 |

# FIG.1A

163   164        165                                    150

| SN | SIZE | FRAMING INFO |

IP PACKET

162                                                ARQ PACKET (160)

| PAYLOAD (UPPER LAYER 1) |              | PAYLOAD (UPPER LAYER 2) |

HARQ PACKET (170)

MUX HEADER

171

# FIG.1B

RX ENTITY

UPPER LAYER ~205

QoS FLOW

DEMUX BLOCK ~210

HARQ

215~ P1

220~ P2

225~ P3

230~ P4

212~

235~ ACK/NACK TRANSMITTER

TX ENTITY

280~ UPPER LAYER

QoS FLOW

MUX BLOCK ~275

HARQ

P1 ~250

P2 ~260

P3 ~265

P4 ~270

~272

ACK/NACK RECEIVER ~250

⟵ PACKET DATA

⤏ HARQ
ACK/NACK

FIG.2

313

363

ARQ LAYER ----------- ARQ ACK/NACK (343) ----------→ ARQ LAYER

312

362

ARQ LAYER ----------- ARQ ACK/NACK (342) ----------→ ARQ LAYER

311

361

ARQ LAYER ----------- ARQ ACK/NACK (341) ----------→ ARQ LAYER

HARQ (DEMUX) LAYER (320) ←-------- HARQ PACKET (380) -------- HARQ (MUX) LAYER (370)

-------- HARQ ACK/NACK (382) -------→

FIG.3

RX ENTITY (405)                                    TX ENTITY (455)

ARQ LAYER 413 ---X--- ARQ LAYER 463

Local ACK/NACK (490)

ARQ LAYER 412 ---X--- ARQ LAYER 462

ARQ LAYER 411 --- ARQ ACK/NACK ---X--- ARQ LAYER 461

NACK/ACK ERROR INDICATOR (484)

| NACK/ACK ERROR DETECTOR (422) | HARQ TX STATUS UNIT (472) |
| HARQ (DEMUX) LAYER (420) | HARQ (MUX) LAYER (470) |

HARQ PACKET (480)

HARQ ACK/NACK (482)

FIG.4

EP 1 855 411 A2

HARQ RX ENTITY — 505

HARQ TX ENTITY — 555

HARQ PACKET (510)

NACK (520)

NEW HARQ PACKET (530)

NACK/ACK
ERROR DETECTED (540)

NACK/ACK ERROR INDICATOR (550)

# FIG.5

FIG.6

FIG.7

FIG.8

START

RECEIVE PACKET ~900

VR(H) UPDATED? 902 —— NO

YES

ANY MISSING PACKET? 904 —— NO

YES

DRIVE T2 FOR MISSING PACKET ~906

END

# FIG.9A

START

RECEIVE PACKET ~920

922
NO ← VR(R) UPDATED?

YES

RESET T2 AND T3 TIMERS FOR
PACKETS PRECEDING VR(R) ~924

926
TIMER EXPIRED? → NO

YES

SEND ACK FOR RECOVERY OF
MISSING PACKET ~928

DRIVE T3 TIMER FOR
CORRESPONDING PACKET ~930

END

FIG.9B

START

EXPIRATION OF T2 OR T3 OCCUR — 940

T2 OR T3 TIMER? — 942

NO → INDICATE TIMER EXPIRATION FOR CORRESPONDING PACKET — 948

YES

SEND ACK FOR RECOVERY OF MISSING PACKET — 944

DRIVE T3 FOR CORRESPONDING PACKET — 946

END

FIG.9C

FIG.10

EP 1 855 411 A2

START

RECEIVE PACKET ──1100

1102
VR(R) UPDATED? ──NO──→

│YES

RESET T2 AND
T3 TIMER FOR PACKETS ──1104
PRECEDING VR(R)

1106
VR(R)<VR(H)? ──YES──→

│NO

1108
T2 OR T3 TIMER IN ──YES──→
OPERATION?

│NO

DRIVE T2 ──1110

END

FIG.11A

START

EXPIRATION OF T2 OR T3 OCCUR ~1120

SEND ACK FOR RECOVERY OF
MISSING PACKET ~1122

DRIVE T3 ~1124

END

# FIG.11B

FIG.12

```
                    ┌──────────┐
                    │  START   │
                    └────┬─────┘
                         │
            ┌────────────▼────────────┐
            │   ACK TRANSMISSION      │──1300
            │   CONDITION OCCUR       │
            └────────────┬────────────┘
                         │
            ┌────────────▼────────────┐
            │      CALCULATE K        │──1302
            └────────────┬────────────┘
                         │    1304              1306
                     ◇───┴───◇    NO        ◇────────◇    NO
                    ╱  K>P?   ╲─────────────╱  M>L?   ╲─────────┐
                    ╲         ╱             ╲         ╱         │
                     ◇───┬───◇              ◇───┬────◇         │
                         │ YES                  │ YES   ┌──────▼──────┐
                         │                      │       │ RE-DRIVE T2 │──1308
                         │                      │       └──────┬──────┘
            ┌────────────▼────────────┐         │              │
            │ SEND ACK FOR RECOVERY OF│◄────────┘       ┌──────▼──────┐
            │    MISSING PACKET       │──1312           │    M++      │──1310
            └────────────┬────────────┘                 └─────────────┘
                         │
            ┌────────────▼────────────┐
            │         M=0             │──1314
            └────────────┬────────────┘
                         │
                    ┌────▼─────┐
                    │   END    │
                    └──────────┘
```

# FIG.13

EP 1 855 411 A2

RX ENTITY (1405)

TX ENTITY (1455)

1413

ARQ LAYER ·············(1443)············· ARQ LAYER 1463

1412

1462

ARQ LAYER ·············(1442)············· ARQ LAYER

Local NACK (1490)

1411

1461

(1493)

ARQ LAYER ······ARQ ACK (1441)······ ARQ LAYER

(1492)

(1491)

HARQ TX STATUS UNIT (1472)

HARQ (DEMUX) LAYER (1420) ←·····HARQ PACKET (1480)·····

HARQ (MUX) LAYER (1470)

······HARQ ACK/NACK (1482)······

FIG.14